# EUROPÄISCHE PATENTSCHRIFT

(11) **EP 2 234 794 B1**
(45) Veröffentlichungstag und Bekanntmachung des Hinweises auf die Patenterteilung: **29.02.2012**
(21) Anmeldenummer: 08871051.2
(22) Anmeldetag: 16.12.2008
(51) Int. Cl.: B29C 70/38, B29C 63/02, B65H 16/00, D06H 7/02

(54) **VERFAHREN UND VORRICHTUNG ZUM ABLEGEN EINES AUFGEROLLTEN MATERIALS**
METHOD AND APPARATUS FOR DEPOSITING A ROLLED MATERIAL
PROCÉDÉ ET DISPOSITIF POUR DÉPOSER UNE MATIÈRE ENROULÉE

(30) Priorität: 14.01.2008 DE 102008004261
(43) Veröffentlichungstag der Anmeldung: 06.10.2010
(73) Patentinhaber: Bremer Werk für Montagesysteme GmbH, 28239 Bremen (DE)
(72) Erfinder: GEBAUER, Ingo, 28203 Bremen (DE); DöRSCH, Christian, 28203 Bremen (DE)
(74) Vertreter: Philipp, Matthias
(86) Internationale Anmeldenummer: PCT/DE2008/002102
(87) Internationale Veröffentlichungsnummer: WO 2009/089814

(56) Entgegenhaltungen:
- WO-A-02/28640
- ES-A1- 2 253 005

## Beschreibung

Die Erfindung betrifft ein Verfahren zum Ablegen eines aufgerollten Materials unter Einhaltung einer vorgegebenen Endkantenposition, sowie eine Vorrichtung, die sich insbesondere zum Durchführen eines derartigen Verfahrens eignet.

Das Aufgabengebiet der Erfindung liegt in der Handhabung von Faserverbundwerkstoffen und Textilien. Bei der Herstellung von Faserverbundwerkstücken müssen textile Halbzeuge paßgenau in vorgeformten Werkzeugen abgelegt werden, wobei insbesondere im Umgang mit trockenen Textilien hohe Anforderungen an die Ablagegenauigkeit gestellt werden. Die Textilien werden in der Regel von einer Vorratsrolle abgerollt und im Ablageprozeß paßgenau zugeschnitten.

Während mit gebräuchlichen automatischen Verfahren Ablagegenauigkeiten mit Toleranzen von 10 bis 30 mm erreicht werden, wären Toleranzen von 1 bis 3 mm wünschenswert. Um eine solche Genauigkeit zu erreichen, muß die Schnittkante des Materials immer an genau der gleichen Position am Anfang der Ablage stehen. Zahlreiche Materialparameter des aufgerollten Materials, wie etwa Biegesteifigkeit, Lagendicke, trockenes, vorimprägniertes Material und Ausgangsmaterial (Kohlenstofffaser, Glasfaser oder andere) haben erheblichen Einfluß auf die Ablagegenauigkeit.

Aus der US 4,541,886 A ist eine Vorrichtung zum automatischen Verlegen von Rollenware bekannt, mit einer Materialaufnahmetrommel, deren Umfangsfläche mit Bohrungen zur Vermittlung eines Unter- oder Überdrucks versehen ist.

Die DE 10 2006 052 592 A1 (nachveröffentlicht) beschreibt ein Verfahren und eine Vorrichtung zum Ablegen von Textilfaserbahnen auf eine Bauteilform, wobei das Ende der abzulegenden Textilfaserbahn mittels eines Tuchgreifers gegriffen und auf einer Bauteilform platziert wird.

Die Druckschrift ES 2 253 005 offenbart eine Vorrichtung zum Ablegen eines aufgerollten Materials unter Einhaltung einer vorgegebenen Endkantenposition, mit einer Handhabungseinrichtung zum Handhaben, Positionieren und Drehen einer eine Rollenumfangsfläche aufweisenden Materialrolle und mit einem Rollenantrieb zum Drehen der Materialrolle.

Die Aufgabe der Erfindung besteht darin, ein Verfahren und eine Vorrichtung zum Ablegen eines aufgerollten Materials zu schaffen, wobei eine vorgegebene Endkantenposition des Materials mit geringstmöglichen Toleranzen gewährleistet sein soll.

Diese Aufgabe wird in verfahrensmäßiger Hinsicht durch ein Verfahren zum Ablegen eines aufgerollten Materials unter Einhaltung einer vorgegebenen Endkantenposition gelöst, mit den Schritten: a) Bereitstellen einer Materialrolle, die eine Rollenumfangsfläche aufweist, an einer Handhabungseinrichtung, b) Drehen der Materialrolle in einer Abrollrichtung, bis ein freier Endabschnitt des Materials über eine mindestens einem Viertel des Rollenumfangs entsprechende Länge, beginnend an einem ersten seitlichen senkrechten Rollenumfangsbereich, frei nach unten hängt, c) Anlegen des Endabschnitts mit einem verfahrbaren Anlagemittel an die Rollenumfangsfläche, beginnend an dem ersten Rollenumfangsbereich, bis an einen zweiten unteren, insbesondere waagerechten Rollenumfangsbereich, d) Drehen der Materialrolle in einer Aufrollrichtung, bis sich eine Endkante des freien Endabschnitts an dem zweiten Rollenumfangsbereich befindet, e) Absenken der Materialrolle, bis sich die Endkante zwischen dem zweiten Rollenumfangsbereich und einer Ablageoberfläche an der vorgegebenen Endkantenposition befindet, und f) Abrollen der Materialrolle entlang der Ablageoberfläche und Ablegen des Materials auf dieser, ausgehend von der Endkantenposition.

Während sich in den meisten Fällen die Längsachse der Materialrolle während der Handhabung im wesentlichen in horizontaler Ausrichtung befindet, ist dies keine zwingende Voraussetzung für die Anwendung des Verfahrens.

Bevorzugt sieht die Erfindung vor, daß in Schritt d) die Endkante mit einem Kantensensor erfaßt wird.

Zweckmäßigerweise ist vorgesehen, daß in Schritt e) die Materialrolle kraftgesteuert abgesenkt und mit einer vorgegebenen Auflagekraft gegen die Ablageoberfläche angelegt wird.

Es kann vorgesehen sein, daß in Schritt f) die Materialrolle mit einer parallel zu der Ablageoberfläche und quer zu der Rollenlängsachse gerichteten Antriebskraft und/oder mit einem Antriebsdrehmoment in Abrollrichtung beaufschlagt wird.

Es kann günstig sein, daß das Anlegemittel beim Abrollen der Materialrolle in Schritt f) entsprechend dem abnehmenden Rollendurchmesser nachgeführt wird.

In vorrichtungsmäßiger Hinsicht wird die vorgenannte Aufgabe durch eine Vorrichtung zum Ablegen eines aufgerollten Materials unter Einhaltung einer vorgegebenen Endkantenposition gelöst, mit a) einer Handhabungseinrichtung zum Handhaben, Positionieren und Drehen einer eine Rollenumfangsfläche aufweisenden Materialrolle, mit einem Rollenantrieb zum Drehen der Materialrolle, b) einem mittels eines gesteuerten Antriebs verfahrbaren Anlegemittel zum Anlegen eines freien Endabschnitts des Materials an die Rollenumfangsfläche, c) einem Erfassungsmittel zum Erfassen einer Endkante des freien Endabschnitts an einem unteren, waagerechten Rollenumfangsbereich, und d) einer auf eine Auflagekraft der Materialrolle gegen eine Ablageoberfläche ansprechenden Steuerung der Handhabungseinrichtung.

Hierbei ist zweckmäßigerweise vorgesehen, daß die Handhabungseinrichtung eine Rollengreifeinrichtung umfaßt. Alternativ kann vorgesehen sein, daß die Handhabungseinrichtung eine mit Unterdruck beaufschlagbare, gesteuert drehantreibbare Materialaufnahmetrommel aufweist, die einen axial und über einen kleinen Teil des Trommelumfangs verlaufenden, luftdurchlässigen Ansaugbereich zur Aufnahme eines bahnförmigen Materials und Bildung einer Materialrolle aufweist.

Bevorzugt ist das Anlegemittel an die Umfangskontur der Materialrolle angepaßt oder anpaßbar.

Das Anlegemittel kann entlang der Länge der Materialrolle beabstandet angeordnete Führungsrollen aufweisen, die andruckkraftgesteuert gegen die Materialrolle verfahrbar sind.

Bevorzugt ist vorgesehen, daß das Anlegemittel andruckkraftgesteuert in einer bezüglich der Materialrolle radialen oder tangentialen Richtung verfahrbar ist.

Zweckmäßigerweise ist vorgesehen, daß das Anlegemittel ein im Querschnitt kreissektorförmig, insbesondere viertelkreisförmig gebogenes Führungsblech aufweist.

Die Erfindung sieht bevorzugt vor, daß das Anlegemittel eine Anzahl von Anlegerollen aufweist, die entsprechend der Umfangskontur der Materialrolle angeordnet sind.

Das Führungsblech kann an einem Ablaufende mit beabstandeten Führungsfingern versehen sein.

Bevorzugt ist das Erfassungsmittel an einem Ablaufende des Anlagemittels angeordnet.

Weitere Vorteile und Merkmale der Erfindung ergeben sich aus der nachfolgenden Beschreibung eines Ausführungsbeispiels, wobei auf eine Zeichnung Bezug genommen wird, in der
Fig. 1a, b jeweils eine perspektivische Ansicht einer erfindungsgemäßen Vorrichtung zum Ablegen eines aufgerollten Materials zeigt,
Fig. 2 eine Seitenansicht der Vorrichtung nach Fig. 1a, b zeigt,
Fig. 3 bis 6 die Vorrichtung nach Fig. 1 und 2 ausschnittsweise in Seitenansichten in unterschiedlichen Betriebsstellungen zeigen.

Das nachfolgend anhand der Zeichnungen beschriebene Ablageverfahren sowie die dafür eingesetzte Vorrichtung eignet sich insbesondere für eine positionsgenaue Ablage von trockener Rollenware, wobei sich im Vergleich zur Ablage von vorimprägniertem Material höhere Ablageraten bei gleichzeitig verbesserter Drapierbarkeit erzielen lassen. Dadurch werden Produktivität, Qualität und Komplexität der Bauteilherstellung positiv beeinflußt.

Bisher wurde mit einem relativ großen Anteil an Verschnittmaterial gearbeitet. Es wird ein den groben Abmessungen entsprechender Textilaufbau hergestellt und dann auf einem Schneidegerät entsprechend der geforderten Form ausgeschnitten. Bei dieser Vorgehensweise spielt die Ablagegenauigkeit eine untergeordnete Rolle, wobei im Falle der Verwendung von vorimprägniertem Material die Adhävisität eine Verbesserung der Ablage unterstützt. Im Unterschied dazu stellt der Einsatz trockener Textilien in Verbindung mit einer Direktablage in einem Werkzeug erhöhte Anforderungen an die Ablagegenauigkeit.

Zur Erhöhung der Ablagegenauigkeit wird erfindungsgemäß eine mechanische Führung für die Ablage von textiler Rollenware verwendet. Bei der Entwicklung der Führung traten als Schwierigkeiten der sehr stark abnehmende Durchmesser während des Ablagevorgangs und die unterschiedliche Biegesteifigkeit der verschiedenen eingesetzten Materialien auf, wobei insbesondere die Biegesteifigkeit einen erheblichen Einfluß auf das Fallverhalten ausgehend von der Rolle hat.

Nachfolgend wird der Verfahrensablauf zur Ablage trockener Textilien mit direktem Kontakt auf einer Werkzeugoberfläche beschrieben. Die Ablage wird durch eine Kraftregelung des Greifers über die Robotersteuerung unterstützt, wodurch sich eine gleichzeitige Vorkompaktierung des Materials ergibt, insbesondere wenn auf bereits abgelegten Materialschichten abgelegt wird.

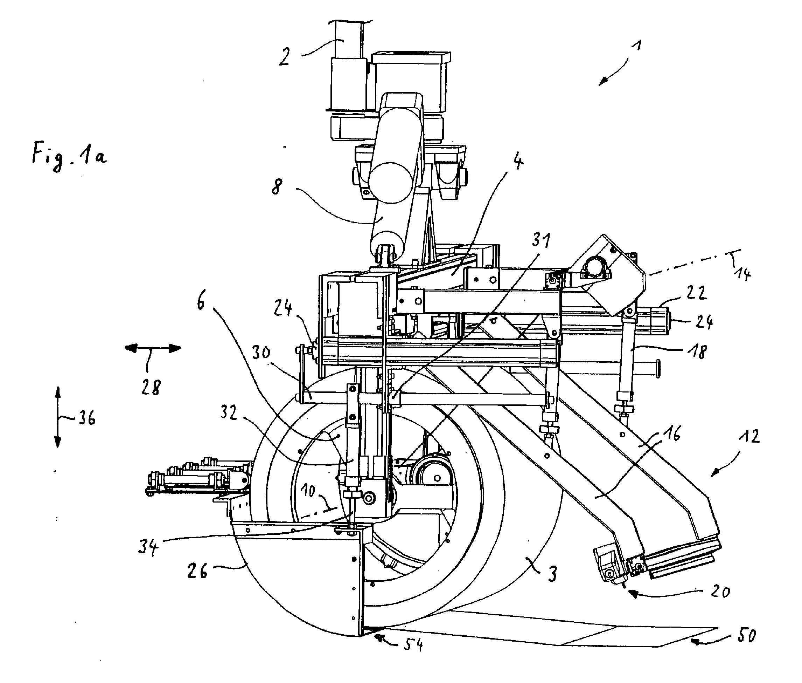

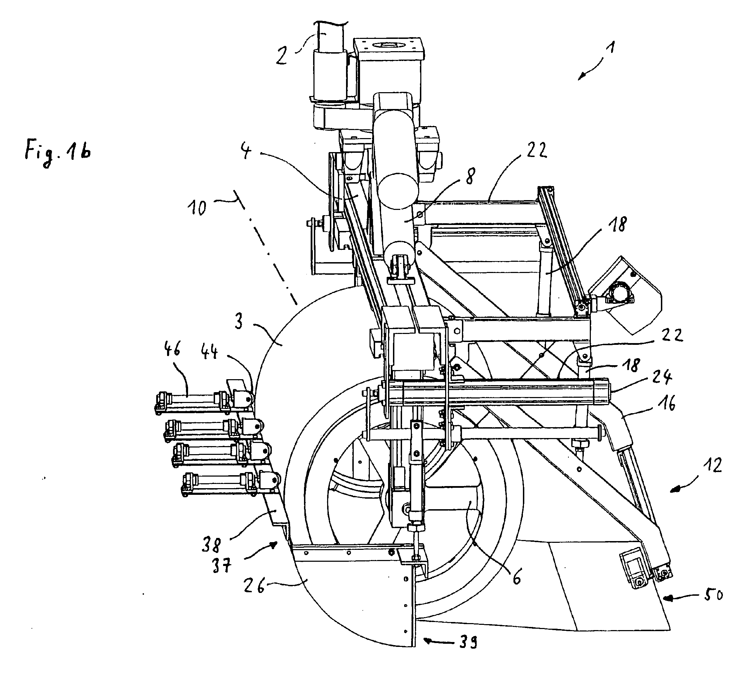

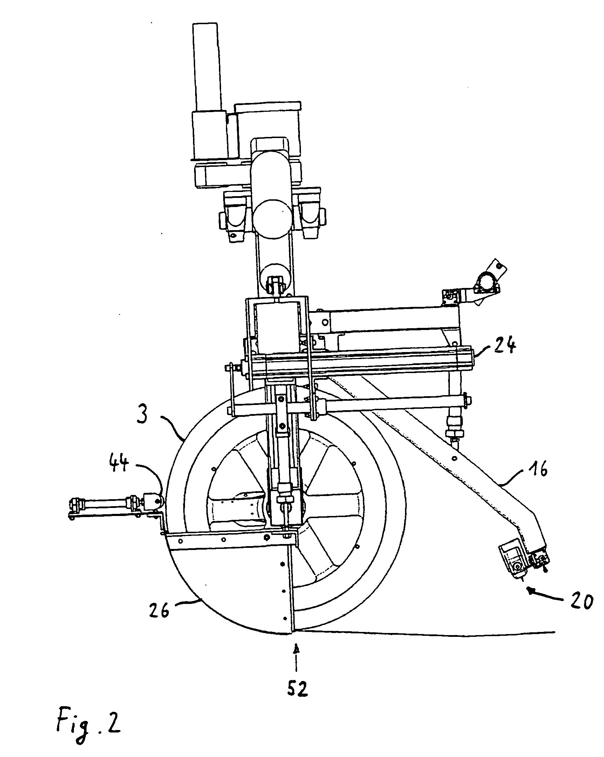

Fig. 1a, b und 2 zeigen unterschiedliche Ansichten der zur Ausführung des Verfahrens verwendeten Vorrichtung. Die im ganzen mit 1 bezeichnete Vorrichtung ist an einem Roboterarm 2 bzw. einem Betätigungsarm einer Handhabungsvorrichtung (nicht dargestellt) gehalten und kann gesteuert in mehreren Richtungen bewegt werden. Der Roboterarm 2 ist mit einem Träger 4 verbunden, an dem jeweils endseitig ein Rollenaufnahmemittel 6 angeordnet ist, beispielsweise radial auseinanderfahrbare Greifeinheiten zum Erfassen eines hohlzylindrischen Rollenkems. Um eine gewünschte Materialrolle 3 aufnehmen oder ablegen zu können, sind die Rollenaufnahmemittel 6 mittels eines oder jeweils eines Aktuators 8 jeweils in Richtung der Rollenlängsachse 10 bewegbar an dem Träger 4 gehalten, so daß eine Rolle 3 durch beiderseitiges Einführen der Rollenaufnahmemittel 6 in einen Rollenkern aufgenommen bzw. in umgekehrter Richtung abgelegt werden kann.

An dem Träger 4 ist weiterhin eine Schneideinheit 12 um eine Schwenkachse 14 schwenkbar an Schwenkarmen 16 gehalten, deren Schwenkbewegung durch Antriebszylinder 18 gesteuert wird. Die Schneideinheit 12 weist ein parallel zu der Rollenlängsachse verfahrbares Schneidmesser 20 auf und erstreckt sich über die volle Breite einer aufgenommenen Rolle, so daß von dieser abgerolltes Material über dessen volle Breite abgelängt werden kann.

An beiden Enden des Trägers 4 ist jeweils ein Querarm 22 mit einem daran angeordneten Linearantrieb 24 gehalten, um ein Anlegemittel in Form eines Führungsblechs 26 in einer ersten horizontalen Richtung 28 zu verlagern, also je nach Höhenstellung des Führungsblechs in einer entweder radial oder tangential zur Rollenlängsachse 10 verlaufenden Richtung. Die Verbindung des Führungsblechs 26 mit dem Querarm 22 erfolgt dabei über eine Führungsstange 30, die in einer an dem Querarm 22 gehaltenen Längsführung 31 geführt ist und an der ein Linearantrieb 32 in Form eines Stellzylinders befestigt ist. Das Führungsblech 26 ist an einer von dem Stellzylinder 32 betätigten Kolbenstange 34 gehalten und in einer zweiten Richtung 36 senkrecht zu der ersten Richtung 28 bewegbar.

Mit Hilfe der beiderseits paarweise angeordneten Linearantriebe 24 und Stellzylinder 32 kann das Führungsblech 26 somit ausgehend von der in Fig. 1 dargestellten Position, in der es einen maximalen Abstand von der aufgenommenen Rolle 3 aufweist, in zwei zueinander senkrechten Richtungen, in denen es unabhängig voneinander antreibbar ist, der Rolle angenähert und bis in Kontakt mit dieser gefahren werden.

In der dargestellten Ausführungsform ist das Führungsblech im Querschnitt im Wesentlichen viertelkreisförmig gebogen und weist an einem Einlaufende 37 ein verstärkendes Winkelblech 38 und an einem gegenüberliegenden Auslaufende 39 eine Anzahl von tangential gerichteten Ausschnitten und dadurch gebildeten beabstandeten Führungsfingern auf, die ebenfalls tangential gerichtet sind.

Alternativ kann das Anlegemittel durch eine Anzahl von Anlege- oder Andruckrollen gebildet sein, die entsprechend der Umfangskontur der Materialrolle und an diese angepaßt oder anpaßbar, etwa mittels gefederter Aufhängung, an dem Träger 4 gehalten sind. Derartige Rollen können ähnlich wie das Führungsblech 26 einen Umfangsbereich von etwa 90° abdecken und über einen Linearantrieb 24 gemeinsam verfahrbar sein.

Im Bereich des Einlaufendes sind an dem Winkelblech 38 eine Reihe von Führungsrollen 44 angeordnet, deren jeweilige Drehachsen übereinstimmen und parallel zu der Rollenlängsachse 10 sind. Die Führungsrollen 44 sind durch jeweils einen andruckkraftgesteuerten Antrieb in Richtung auf die Rolle 3 ausfahrbar, beispielsweise mittels jeweils eines kraftgesteuerten Linearantriebs oder Stellzylinders 46.

Die Vorrichtung ist weiterhin mit einer Lichtschranke als Kantensensor zur Erfassung der Schnittkante oder freien Endkante 50 des aufgerollten Materials versehen, die in diesem Beispiel durch ein, zwei oder mehr Lichtsensorelemente 52 gebildet ist, die an einer Spendekante 54 am Ablaufende des Führungsblechs 26 angeordnet sind.

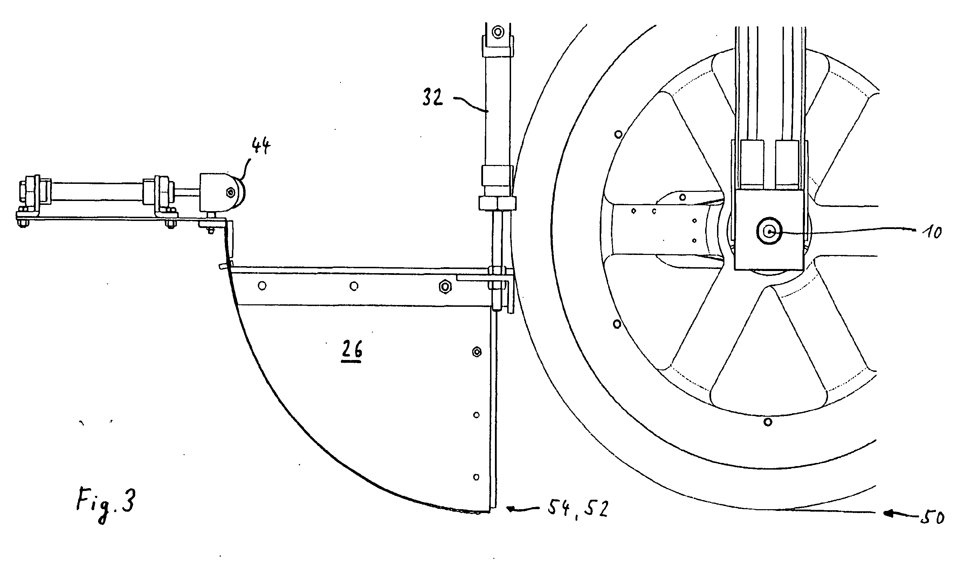

Das erfindungsgemäße Verfahren zur Ablage eines aufgerollten Materials beginnt damit, daß das Führungsblech 26 entgegen der ersten Richtung in die in Fig. 3 dargestellte, weitestmöglich von der Rollenlängsachse 10 entfernte Stellung gefahren wird. Die Rollenaufnahmemittel 6 werden entlang der Rollenlängsachse auseinander gefahren, die Vorrichtung wird in Ausrichtung auf eine aufzunehmende Rolle positioniert, die Rollenaufnahmemittel 6 werden in den Rollenaufnahmekem eintauchend zusammengefahren und durch Ausfahren von Spannelementen o.ä. mit der Rolle 3 in festes Zusammenwirken gebracht.

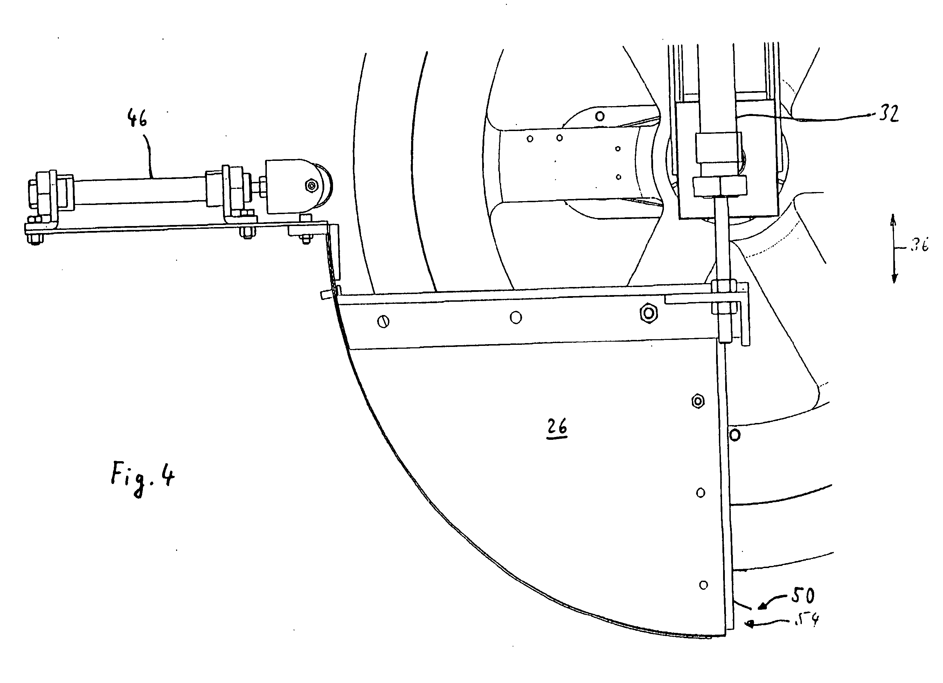

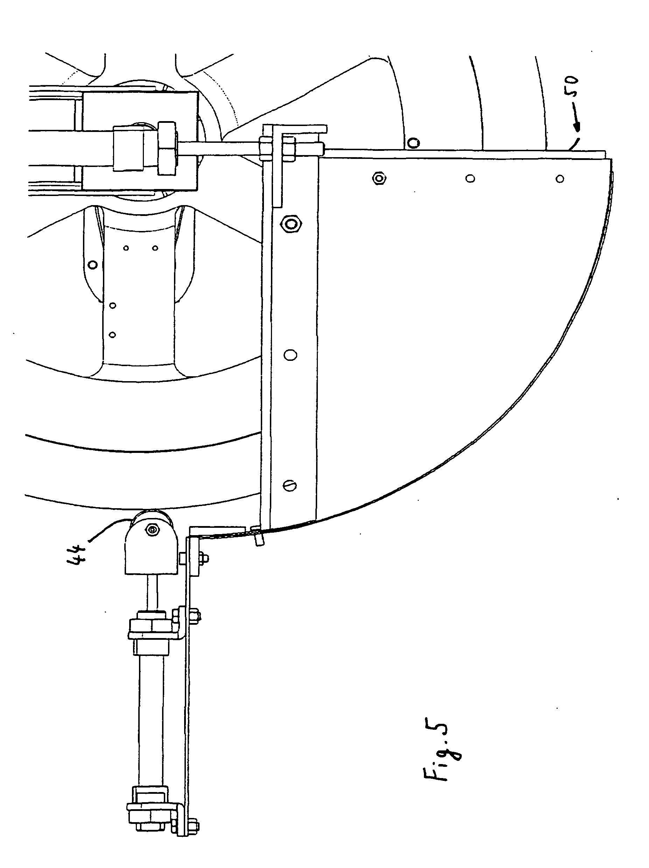

Nach Aufnahme der Rolle wird das Führungsblech 26 in der ersten Richtung, hier horizontal nach rechts, in eine Ablageposition gefahren, in der sich die Spendekante 54 unterhalb der Rollenlängsachse 10 befindet, bezogen auf eine vertikale Ausrichtung der mit der Wirkungslinie der Stellzylinder 32 übereinstimmenden zweiten Richtung 36 (Fig. 4). Die Schnittkante 50 wird durch Rotation der Rolle in den Bereich der Spendekante 54 gebracht und dort mit Hilfe der Lichtsensorelemente 52 erfaßt. Die Führungsrollen 44 werden druckgesteuert ausgefahren (Fig. 5), bis sie mit einer gewünschten, vorgegebenen Andruckkraft gegen die Materialrolle anliegen.

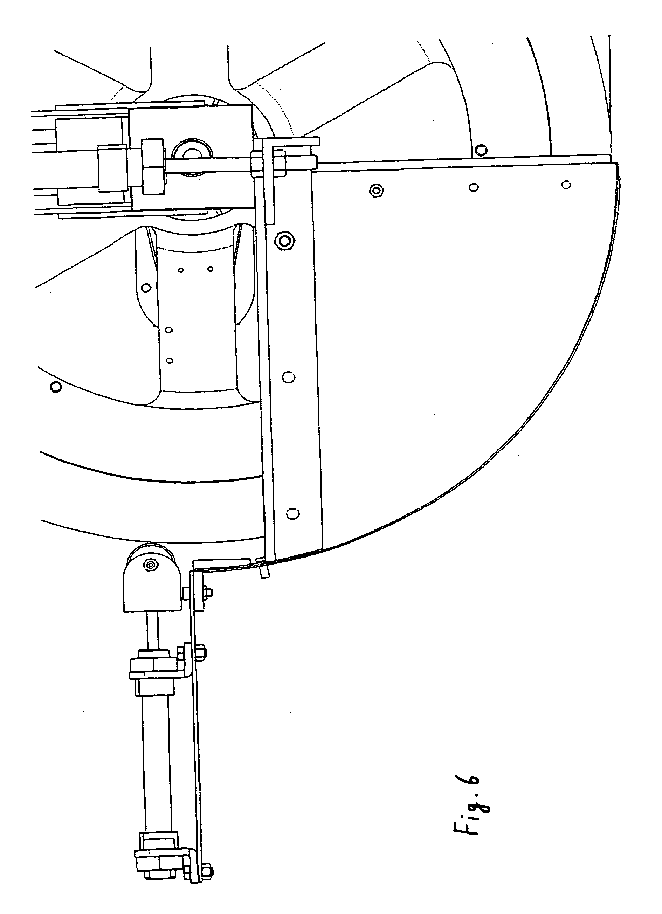

Das Führungsblech 26 wird nun in der zweiten Richtung 36, in diesem Fall senkrecht nach oben, druckgesteuert bis in Kontakt mit der Materialrolle 3 gefahren (Fig. 2, 6). Die Schnittkante 50 wird ggf. durch erneutes Drehen der Materialrolle in ihrer Position im Bereich der Spendekante 54 gehalten.

Anschließend wird die Vorrichtung auf eine Werkzeugoberfläche aufgesetzt, das Führungsblech entgegen der ersten Richtung von der Rolle weggefahren und das Material unter Verlagerung der Rolle entlang der Ablageoberfläche von der Rolle abgerollt. Dies kann beispielsweise durch Synchronisation des Rollenantriebs mittels Laserabtastung des Rollendurchmessers erfolgen, um weder eine zu große noch eine zu geringe Spannung in dem Material zu erzeugen.

Damit bei diesem Vorgang, bei dem der Durchmesser der Rolle je nach abzurollender Länge gegebenenfalls erheblich abnimmt, das Führungsblech 26 weiterhin in der gewünschten Relativstellung zu der Materialrolle 3 verbleibt, in der sich die Spendekante 54 unterhalb der Rollenlängsachse 10 und in Kontakt mit dem Rollenumfang befindet, wird das Führungsblech 26 in der zweiten Richtung 36 senkrecht nach oben nachgeführt, indem die Stellzylinder 32 entsprechend gesteuert werden. Alternativ oder zusätzlich kann der Linearantrieb 24 angesteuert werden, um das Führungsblech 26 erforderlichenfalls zusätzlich oder nur in horizontaler Richtung zu verfahren.

Bei Erreichen einer gewünschten abgerollten Bahnlänge wird die Schneideinheit 12 abgesenkt und die Materialbahn abgelängt. Abschließend wird die Schnittkante durch eine Aufrollbewegung der Rolle in eine Magazinierposition gebracht, in der sie sich im Bereich der bzw. gegenüberliegend zu den Führungsrollen 44 befindet.

In einer Variante der Erfindung ist vorgesehen, daß die Vorrichtung anstelle der Rollenaufnahmemittel 6 mit einer Materialaufixahmetrornmel zur Aufnahme eines insbesondere textilen, bahnförmigen Materials versehen ist. In diesem Fall dient die Vorrichtung sowohl der Aufnahme als auch der Ablage eines aufrollbaren bzw. aufgerollten Materials.

Die Materialaufnahmetrommel ist anstelle der in Fig. 1 dargestellten Materialrolle angeordnet und drehbar gelagert an der Vorrichtung gehalten, wobei Stirnseiten der Trommel mit Ausnahme einer achsnahen Unterdruckzuführung nach außen geschlossen sind. Die Materialaufnahmetrommel ist als Saugaufnahmetrommel ausgebildet, innerhalb der mittels eines Sauggebläses oder eines mit einer externen Unterdruckquelle verbindbaren Sauganschlusses ein Unterdruck erzeugt werden kann. Die Trommel könnte entlang ihres vollständigen Umfangs mehr oder weniger stark luftdurchlässig ausgebildet sein, um ein bahnförmiges, insbesondere textiles Material durch Ansaugen aufnehmen zu können. Bevorzugt ist allerdings vorgesehen, daß die Trommel einen axial oder in Trommellängsrichtung verlaufenden und sich über einen kleinen Teil des Trommelumfangs erstreckenden luftdurchlässigen Ansaugbereich aufweist, der somit in Form eines längsverlaufenden Ansaugschlitzes ausgebildet ist und zur Aufnahme eines bahnförmigen Material und zur Bildung einer Materialrolle dient, wobei die Materialaufnahmetrommel als Wickelkern dient.

### Bezugszeichenliste

- 1: Vorrichtung
- 2: Roboterarm (Handhabungsvorrichtung)
- 3: Rolle
- 4: Träger
- 6: Rollenaufnahmemittel
- 8: Aktuator
- 10: Rollenlängsachse
- 12: Schneideinheit
- 14: Schwenkachse
- 16: Schwenkarm
- 18: Antriebszylinder
- 20: Schneidmesser
- 22: Querarm
- 24: Linearantrieb
- 26: Führungsblech
- 28: erste Richtung
- 30: Führungsstange
- 31: Längsführung
- 32: Stellzylinder
- 34: Kolbenstange
- 36: zweite Richtung
- 37: Einlaufende
- 38: Winkelblech
- 39: Auslaufende
- 44: Führungsrolle
- 46: Stellzylinder
- 50: freie Endkante
- 52: Lichtsensorelement
- 54: Speisekante

## Patentansprüche

1. Verfahren zum Ablegen eines aufgerollten Materials unter Einhaltung einer vorgegebenen Endkantenposition, mit den Schritten:
a) Bereitstellen einer Materialrolle (3), die eine Rollenumfangsfläche aufweist, an einer Handhabungseinrichtung,
b) Drehen der Materialrolle (3) in einer Abrollrichtung, bis ein freier Endabschnitt des Materials über eine mindestens einem Viertel des Rollenumfangs entsprechende Länge, beginnend an einem ersten seitlichen, senkrechten Rollenumfangsbereich, frei nach unten hängt,
c) Anlegen des Endabschnitts mit einem verfahrbaren Anlagemittel (26) an die Rollenumfangsfläche, beginnend an dem ersten Rollenumfangsbereich, bis an einen zweiten unteren, insbesondere waagerechten Rollenumfangsbereich (54),
d) Drehen der Materialrolle (3) in einer Aufrollrichtung, bis sich eine Endkante (50) des freien Endabschnitts an dem zweiten Rollenumfangsbereich (54) befindet,
e) Absenken der Materialrolle (3), bis sich die Endkante (50) zwischen dem zweiten Rollenumfangsbereich und einer Ablageoberfläche an der vorgegebenen Endkantenposition befindet, und
f) Abrollen der Materialrolle (3) entlang der Ablageoberfläche und Ablegen des Materials auf dieser, ausgehend von der Endkantenposition.

2. Verfahren nach Anspruch 1, **dadurch gekennzeichnet, daß** in Schritt d) die Endkante (50) mit einem Kantensensor (52) erfaßt wird.

3. Verfahren nach einem der vorangehenden Ansprüche, **dadurch gekennzeichnet, daß** in Schritt e) die Materialrolle (3) kraftgesteuert abgesenkt und mit einer vorgegebenen Auflagekraft gegen die Ablageoberfläche angelegt wird.

4. Verfahren nach einem der vorangehenden Ansprüche, **dadurch gekennzeichnet, daß** in Schritt f) die Materialrolle (3) mit einer parallel zu der Ablageoberfläche und quer zu der Rollenlängsachse gerichteten Antriebskraft und/oder mit einem Antriebsdrehmoment in Abrollrichtung beaufschlagt wird.

5. Verfahren nach einem der vorangehenden Ansprüche, **dadurch gekennzeichnet, daß** das Anlegemittel (26) beim Abrollen der Materialrolle in Schritt f) entsprechend dem abnehmenden Rollendurchmesser nachgeführt wird.

6. Vorrichtung zum Ablegen eines aufgerollten Materials unter Einhaltung einer vorgegebenen Endkantenposition, mit
a) einer Handhabungseinrichtung zum Handhaben, Positionieren und Drehen einer eine Rollenumfangsfläche aufweisenden Materialrolle (3), mit einem Rollenantrieb zum Drehen der Materialrolle (3),
**gekennzeichnet durch**
b) einem mittels eines gesteuerten Antriebs verfahrbaren Anlegemittel (26) zum Anlegen eines freien Endabschnitts des Materials an die Rollenumfangsfläche,
c) einem Erfassungsmittel (52) zum Erfassen einer Endkante (50) des freien Endabschnitts an einem unteren, waagerechten Rollenumfangsbereich, und
d) einer auf eine Auflagekraft der Materialrolle (3) gegen eine Ablageoberfläche ansprechenden Steuerung der Handhabungseinrichtung.

7. Vorrichtung nach Anspruch 6, **dadurch gekennzeichnet, daß** die Handhabungseinrichtung eine Rollengreifeinrichtung (6) umfaßt.

8. Vorrichtung nach Anspruch 6, **dadurch gekennzeichnet, daß** die Handhabungseinrichtung eine mit Unterdruck beaufschlagbare und drehantreibbare Materialaufnahmetrommel aufweist, die einen axial und über einen kleinen Teil des Trommelumfangs verlaufenden luftdurchlässigen Ansaugbereich zur Aufnahme eines bahnförmigen Materials und Bildung einer Materialrolle aufweist und mittels eines gesteuerten Schrittmotors oder Servoantriebs drehantreibbar sein kann.

9. Vorrichtung nach einem der Ansprüche 6 bis 8, **dadurch gekennzeichnet, daß** das Anlegemittel (26) an die Umfangskontur der Materialrolle angepaßt oder anpaßbar ist.

10. Vorrichtung nach einem der Ansprüche 6 bis 9, **dadurch gekennzeichnet, daß** das Anlegemittel (26) entlang der Länge der Materialrolle (3) beabstandet angeordnete Führungsrollen (44) aufweist, die andruckkraftgesteuert gegen die Materialrolle (3) verfahrbar sind.

11. Vorrichtung nach einem der Ansprüche 6 bis 10, **dadurch gekennzeichnet, daß** das Anlegemittel andruckkraftgesteuert in einer bezüglich der Materialrolle (3) radialen oder tangentialen Richtung verfahrbar ist.

12. Vorrichtung nach einem der Ansprüche 6 bis 10, **dadurch gekennzeichnet, daß** das Anlegemittel ein im Querschnitt kreissektorförmig, insbesondere viertelkreisFörmig gebogenes Führungsblech (26) aufweist.

13. Vorrichtung nach einem der Ansprüche 6 bis 10, **dadurch gekennzeichnet, daß** das Anlegemittel eine Anzahl von Anlegerollen aufweist, die entsprechend der Umfangskontur der Materialrolle (3) angeordnet sind.

14. Vorrichtung nach einem der Ansprüche 6 bis 12, **dadurch gekennzeichnet, daß** das Führungsblech (26) an einem Ablaufende mit beabstandeten Führungsfingern versehen ist.

15. Vorrichtung nach einem der Ansprüche 6 bis 14, **dadurch gekennzeichnet, daß** das Erfassungsmittel (52) an einem Ablaufende des Anlegemittels angeordnet ist.

## Claims

1. Method for depositing a rolled material while maintaining a predetermined end border position, comprising the following steps:
a) Providing a material roll (3), which has a roll circumference surface, on a handling device,
b) Rotating the material roll (3) in a roll-off direction, until a free end section of the material hangs down freely over a length corresponding at least to one quarter of the roll circumference, starting at a first lateral, particularly perpendicular roll circumference region,
c) Placing the end section with a movable depositing means (26) against a roll circumference surface, starting at the first roll circumference region, up to a second lower, particularly horizontal roll circumferential region (54),
d) Rotating the material roll (3) in a roll-up direction, until an end border (50) of the free end section is located at the second roll circumferential region (54),
e) Lowering the material roll (3), until the end border (50) is located between the second roll circumferential region and a depositing surface at the predetermined end border position, and
f) Rolling off the material roll (3) along the depositing surface and depositing the material thereon, starting from the end border position.

2. Method according to claim 1, **characterized in that**, in step d), the end border (50) is detected with a border sensor (52).

3. Method according to any one of the above claims, **characterized in that**, in step e), the material roll (3) is lowered force-controlled and is deposited with a predetermined lowering force against the depositing surface.

4. Method according to any one of the above claims, **characterized in that**, in step f), the material roll (3) is subjected to a driving force directed parallel with the depositing surface and transverse to the roll longitudinal axis and/or to a driving torque in roll-off direction.

5. Method according to any one of the above claims, **characterized in that** the depositing means (26) is adjusted corresponding to the roll diameter being removed when the material roll is rolled off in step f).

6. Device for depositing a rolled material while maintaining a predetermined end border position, comprising
a) a handling device for handling, positioning and rotating a material roll (3), having a roll circumferential surface, with a roll drive to rotate the material roll (3),
b) a depositing means (26), movable by means of a controlled drive, for depositing a free end section of the material onto the roll circumferential surface,
c) a sensor (52) to detect an end border (50) of the free end section at a lower, horizontal roll circumferential region, and
d) a control of the handling device responsive to a contact force against a depositing surface of the material roll (3).

7. Device according to claim 6, **characterized in that** the handling device comprises a roll gripper (6).

8. Device according to claim 6, **characterized in that** the handling device has a material holding drum which can be subjected to negative pressure and can be rotated, having an air permeating suction region running axially and across a small part of the drum circumference for holding a web-like material and forming a material roll and can be rotated by means of a controlled stepper motor or servo drive.

9. Device according to any one of claims 6 to 8, **characterized in that** the depositing means (26) is adapted or can be adapted to the circumferential contour of the material roll.

10. Device according to any one of claims 6 to 9, **characterized in that** the depositing means (26) has guide rolls (44) which are arranged at a distance along the length of the material roll (3) and can be moved controlled by a force pressing against the material roll (3).

11. Device according to any one of claims 6 to 10, **characterized in that** the depositing means can be driven, controlled by pressing force, in a tangential or radial direction in relation to the material roll (3).

12. Device according to any one of claims 6 to 10, **characterized in that** the depositing means has a guide plate (26) with a curved sector-shaped, especially quadrant-shaped, cross section.

13. Device according to any one of claims 6 to 10, **characterized in that** the depositing means has a number of depositing rollers which are arranged according to the circumferential contour of the material roll (3).

14. Device according to any one of claims 6 to 12, **characterized in that** the guide plate (26) is provided, at a discharge end, with spaced apart guide fingers.

15. Device according to any one of claims 6 to 14, **characterized in that** the sensor (52) is arranged at a discharge end of the depositing means.

## Revendications

1. Procédé servant à déposer une matière enroulée tout en maintenant une position de bordure d'extrémité prédéterminée, comportant les étapes suivantes consistant à :
a) Mettre en oeuvre un rouleau de matière (3), qui a une surface de circonférence de rouleau, sur un dispositif de manipulation,
b) Mettre en rotation le rouleau de matière (3) dans un sens de déroulement, jusqu'à ce qu'une section d'extrémité libre de la matière pende librement vers le bas sur une longueur correspondant à au moins un quart de la circonférence du rouleau, en commençant au niveau d'une première région latérale de circonférence du rouleau particulièrement perpendiculaire,
c) Placer la section d'extrémité à l'aide d'un moyen de dépôt mobile (26) contre une surface de circonférence du rouleau, en commençant au niveau de la première région de circonférence du rouleau, jusqu'à une seconde région de circonférence inférieure du rouleau particulièrement horizontale (54),
d) Mettre en rotation le rouleau de matière (3) dans un sens d'enroulement, jusqu'à ce qu'une bordure d'extrémité (50) de la section d'extrémité libre se trouve au niveau de la seconde région de circonférence du rouleau (54),
e) Abaisser le rouleau de matière (3), jusqu'à ce que la bordure d'extrémité (50) se trouve entre la seconde région de circonférence du rouleau et une surface de dépôt au niveau de la position de bordure d'extrémité prédéterminée, et
f) Dérouler le rouleau de matière (3) le long de la surface de dépôt et y déposer la matière, en commençant par la position de bordure d'extrémité.

2. Procédé selon la revendication 1, **caractérisé en ce que**, au cours de l'étape d), la bordure d'extrémité (50) est détectée par un capteur de bordure (52).

3. Procédé selon l'une quelconque des revendications précédentes, **caractérisé en ce que**, au cours de l'étape e), le rouleau de matière (3) est abaissé de manière contrôlée par force et est déposé sous l'effet d'une force d'abaissement prédéterminée contre la surface de dépôt.

4. Procédé selon l'une quelconque des revendications précédentes, **caractérisé en ce que**, au cours de l'étape f), le rouleau de matière (3) est soumis à une force d'entraînement dirigée de manière parallèle par rapport à la surface de dépôt et de manière transversale par rapport à l'axe longitudinal du rouleau et/ou à un couple d'entraînement dans le sens de déroulement.

5. Procédé selon l'une quelconque des revendications précédentes, **caractérisé en ce que** le moyen de dépôt (26) est ajusté pour correspondre au diamètre du rouleau retiré quand le rouleau de matière est déroulé au cours de l'étape f).

6. Dispositif servant à déposer une matière enroulée tout en maintenant une position de bordure d'extrémité prédéterminée, comportant
a) un dispositif de manipulation destiné à manipuler, à positionner et à mettre en rotation un rouleau de matière (3), ayant une surface de circonférence du rouleau, un entraînement de rouleau servant à mettre en rotation le rouleau de matière (3),
b) un moyen de dépôt (26), mobile par le biais d'un entraînement commandé, destiné à déposer une section d'extrémité libre de la matière sur la surface de circonférence du rouleau,
c) un capteur (52) destiné à détecter une bordure d'extrémité (50) de la section d'extrémité libre au niveau d'une région inférieure horizontale de circonférence du rouleau, et
d) un dispositif de commande du dispositif de manipulation réagissant à une force de contact contre une surface de dépôt du rouleau de matière (3).

7. Dispositif selon la revendication 6, **caractérisé en ce que** le dispositif de manipulation comporte un appareil de préhension de rouleau (6).

8. Dispositif selon la revendication 6, **caractérisé en ce que** le dispositif de manipulation comporte un tambour de retenue de matière qui peut être soumis à une pression négative et qui peut être mis en rotation, ayant une région d'aspiration perméable à l'air s'étendant dans le sens axial et en travers d'une petite partie de la circonférence du tambour à des fins de retenue d'une matière en bande et formant un rouleau de matière et pouvant être mis en rotation par le biais d'un moteur pas à pas commandé ou par le biais d'une servocommande.

9. Dispositif selon l'une quelconque des revendications 6 à 8, **caractérisé en ce que** le moyen de dépôt (26) est adapté ou peut être adapté au profil de circonférence du rouleau de matière.

10. Dispositif selon l'une quelconque des revendications 6 à 9, **caractérisé en ce que** le moyen de dépôt (26) comporte des rouleaux de guidage (44) qui sont arrangés à une distance le long de la longueur du rouleau de matière (3) et pouvant être mis en déplacement de manière contrôlée par une force venant comprimer contre le rouleau de matière (3).

11. Dispositif selon l'une quelconque des revendications 6 à 10, **caractérisé en ce que** le moyen de dépôt peut être entraîné, de manière contrôlée par une force de compression, dans une direction tangentielle ou radiale relativement au rouleau de matière (3).

12. Dispositif selon l'une quelconque des revendications 6 à 10, **caractérisé en ce que** le moyen de dépôt comporte une plaque de guidage (26) ayant une coupe transversale en forme de secteur courbe, en particulier en forme de quadrant.

13. Dispositif selon l'une quelconque des revendications 6 à 10, **caractérisé en ce que** le moyen de dépôt comporte un certain nombre de rouleaux de dépôts qui sont arrangés en fonction du profil de circonférence du rouleau de matière (3).

14. Dispositif selon l'une quelconque des revendications 6 à 12, **caractérisé en ce que** la plaque de guidage (26) est pourvue, au niveau d'une extrémité de décharge d'ergots de guidage espacés les uns par rapport aux autres.

15. Dispositif selon l'une quelconque des revendications 6 à 14, **caractérisé en ce que** le capteur (52) est arrangé au niveau d'une extrémité de décharge du moyen de dépôt.
